# EUROPEAN PATENT SPECIFICATION

(11) **EP 4 155 185 B1**
(45) Date of publication and mention of the grant of the patent: **01.01.2025**
(21) Application number: 22198002.2
(22) Date of filing: 27.09.2022
(51) Int. Cl.: B62M 9/122, B62M 9/1242, B62M 9/1244, B62H 1/06

(54) **BICYCLE REAR DERAILLEUR OF THE ARTICULATED PARALLELOGRAM TYPE**
HINTERER FAHRRADKETTENSCHALTER VOM GELENKPARALLELOGRAMMTYP
DÉRAILLEUR ARRIÈRE DE BICYCLETTE DU TYPE À PARALLÉLOGRAMME ARTICULÉ

(30) Priority: 28.09.2021 IT 202100024773
(43) Date of publication of application: 29.03.2023
(73) Proprietor: Campagnolo S.r.l., 36100 Vicenza (VI) (IT)
(72) Inventor: MARANGON, Christian, 36035 Marano Vicentino (VI) (IT); DE POLI, Luca, 35015 Galliera Veneta (PD) (IT)
(74) Representative: Studio Torta S.p.A.

(56) References cited:
- EP-A1- 2 110 305
- US-A- 4 362 523
- US-A1- 2005 239 587
- US-B1- 6 290 621

## Description

The present invention relates to a bicycle rear derailleur of the articulated parallelogram type.

A motion transmission system in a bicycle typically comprises a closed-loop chain extending between toothed wheels associated with the bottom bracket spindle and with the hub of the rear wheel, respectively. When at at least one of the bottom bracket spindle and the hub of the rear wheel there is a group of coaxial toothed wheels (comprising more than one toothed wheel), respectively also called chain rings and sprockets, and the motion transmission system is thus provided with a gearshift, a front derailleur and/or a rear derailleur - of particular interest herein - is/are provided for bringing the transmission chain into engagement with a preselected toothed wheel, thus changing the gear ratio.

In some cases, the chain is replaced by a toothed belt, but for the sake of brevity hereinafter and in the attached claims, term "chain" will be used to refer to both cases of motion transmission member between the two toothed wheels, in particular in the expression "chain guide".

In the present description and in the attached claims, term "chain guide" is used to indicate the component which, overall, is moved with respect to the support body and to the connecting arms; in the case of a rear derailleur, it may include a first member articulated in the articulated parallelogram, sometimes called "bottom body" and a second member movable therewith, sometimes called "rocker arm".

A bicycle derailleur of the articulated parallelogram type comprises a plurality of mutually movable components, comprising a support body configured to be attached to a bicycle frame, a chain guide and a pair of connecting arms, comprising a proximal connecting arm and a distal connecting arm, for connection between the support body and the chain guide at respective articulation axes.

In the present description and in the attached claims, adjectives such as "proximal" and "distal" refer to the mounted condition of the derailleur on the bicycle. In particular, "proximal" is used to indicate closer to the frame and adjective "distal" is used to indicate farther from the frame.

In the case of a mechanical gearshift, the derailleurs are controlled exclusively by the cyclist through one or more manual control devices, for example mounted on the handlebars, and the mutual motion of the components in order to change the angles of the articulated parallelogram is forced for example through a sheathed inextensible cable (also known as Bowden cable).

In the case of an electric/electronic gearshift, in each derailleur a geared motor is provided for mutually moving said components.

The output shaft of the geared motor may extend along an articulation axis in order to directly control the angular position of one of the mutually movable components, for example of one of the connecting arms, or it may extend along the diagonal of the parallelogram.

In the present description and in the attached claims, expression "electric/electronic" is used to indicate an electric device that may also include electronic components and/or a data processing system.

In the present description and in the attached claims, under term "geared motor", a motor not coupled with any speed reducer is meant to be encompassed.

For controlling the geared motor, and thus the derailleur, electric/electronic signals issued by the manual control devices and/or processed by a data processing system, on the basis of detected quantities relating to the status of the cyclist and/or of the bicycle (derailleurs included) and/or of the route, are used, so that the gearshift may generally operate in manual mode (which on the other hand is the only one available in the case of a mechanical gearshift), in totally automatic mode and/or in semiautomatic mode.

Both in the case of mechanical derailleurs and in the case of electric/electronic derailleurs, it is important that the position of the chain guide is not only precisely controllable in order to allow the chain to engage with the toothed wheel desired at each time, but also that the chain guide does not approach too much the bicycle frame, beyond the largest sprocket, where the rocker arm could hit the spokes of the rear wheel with ensuing mechanical damages and fall risk, nor that it moves too far from the bicycle frame, beyond the smallest sprocket, where the rocker arm would be too exposed to lateral shocks.

In order to prevent this possibility, it is necessary to limit the stroke of the articulated parallelogram, providing for so-called "bottom" and "upper" limiter assemblies. Typically the limiter assemblies are adjustable to set angles that determine the maximum aperture and the maximum closure of the articulated parallelogram.

A limiter assembly typically provides for an adjustment blind screw or limit screw in threaded engagement with a through hole of a first component of the derailleur, and an abutment provided on a second component of the derailleur: by screwing and unscrewing the blind screw, its protrusion from the through hole is adjusted, and therefore the angle by which it is necessary to mutually rotate the first component and the second component, about the articulation axis shared by them, in order to make the blind screw abut against the abutment, determining the closure or the maximum aperture of the parallelogram, as the case may be.

In the majority of cases, the blind screw is provided on the support body or top body, while the abutment is provided on the connecting arm, respectively on the distal connecting arm as far as bottom limiter assembly is concerned and on the proximal connecting arm as far as the top limiter assembly is concerned.

In order to avoid twist problems, each of the proximal connecting arm and the distal connecting arm is sometimes connected in the articulated parallelogram at two spaced points along each of the two involved articulation axes.

In the known derailleurs, the limiter assemblies are effective at a single connection point of the connecting arm to its articulation axis to the support body - under the above assumption according to which the blind screw is on the support body. For example, the abutment may be formed as a flat surface on a lug protruding from an ear or a flange of the connecting arm wherein a hole is formed, wherein an articulation pivot or the output shaft of the geared motor is inserted.

The Applicant has recognized that the above described embodiment is not optimal from the point of view of the strain distribution.

Each of US 6,290,621 B1 and US 4,362,523 discloses a bicycle rear derailleur according to the preamble of claim 1.

The technical problem at the basis of the present invention is to improve the efficiency of the limiter assembly.

In an aspect, the invention relates to a bicycle rear derailleur comprising:
a plurality of mutually movable components, comprising a support body configured to be attached to a bicycle frame, a chain guide and a pair of connecting arms, comprising a proximal connecting arm and a distal connecting arm, for connection between the support body and the chain guide at respective articulation axes,
each connecting arm being connected at two points spaced along each of its own two articulation axes, a longitudinal direction of each connecting arm extending orthogonally to and intersecting said two articulation axes, and a transverse direction of each connecting arm extending parallel to said two articulation axes, and
a limiter assembly effective between (i) a first component selected between the support body and the chain guide and (ii) a first connecting arm of the pair of connecting arms, to define an extreme value of the internal angle of the articulated parallelogram at the vertex corresponding to the articulation axis shared by them,
wherein the limiter assembly comprises a first member on the first component and a second member on the first connecting arm, to receive the first member in abutment when the first component and the first connecting arm are mutually rotated in the angular direction of approach of the first member to the second member,
characterized in that the second member extends at least along an intermediate section in the transverse direction of the first connecting arm.

In the present description and in the attached claims, under "extreme value", a maximum value or a minimum value is meant to be indicated.

By providing for the second member in an intermediate position, the involved strains distribute more uniformly on the first connecting arm.

The first connecting arm may comprise two elementary connecting arms, each connected at a single point to each of the two articulation axes.

In the transverse direction of the first connecting arm, the intermediate section may be longer than each of the elementary connecting arms.

This provision allows a high tolerance in the alignment, along the transverse direction of the first connecting arm, between the two members of the limiter assembly, and admits misalignments that may occur during the use of the bicycle.

Alternatively or additionally, the elementary connecting arms may be rigidly connected to each other by at least one structural member extended transversally between the elementary connecting arms of the first connecting arm, the second member being provided on a cross member, extended transversally between the elementary connecting arms of the first connecting arm, additional with respect to the structural member.

This provision allows the structural member (or the structural members) and the cross member, intended to have the second member of the limiter assembly formed thereon, to be independently configured; in particular it allows the structural member to be provided in, or in strict proximity to, the plane containing the two articulation axes, so that it has the maximum efficiency, while providing for the cross member in the position most suitable for its purpose. This provision also allows to further strengthen the first connecting arm with respect to the provision of the only member structurally necessary for the two elementary connecting arms to behave as if they were a single piece.

The cross member may be an oblong body extended in the transverse direction and spaced from the plane containing the two articulation axes.

In the present description and in the attached claims, under "oblong body extended in the transverse direction", a body is meant to be indicated, which size in the transverse direction is comparatively large with respect to its size in a cross-section taken in a plane orthogonal to the transverse direction.

Said distance and/or the angle formed between the plane containing the two articulation axes and a plane containing the articulation axis between the first component and the first connecting arm and passing through the cross member may be preselected as a function of the desired extreme angle and/or of a range of values thereof.

At least one of the first member and the second member of the limiter assembly may be adjustable to adjust said extreme value of the angle.

The second member may have a circular section in the intermediate section.

For example, when it is provided on the cross member, the latter may comprise an internally threaded bushing, having a circular section, screwed between the two elementary connecting arms.

Through this provision, a particular precision in the definition of the angular position of the cross member with respect to said plane containing the articulation axis between the first component and the first connecting arm and passing through the cross member is not necessary, as on the contrary is necessary in the case wherein, instead, a flat abutment surface is used as the first member of the limiter assembly.

Alternatively, the cross member may comprise an internally threaded bushing screwed between the two elementary connecting arms with an adjustable screwing angle, having, in said intermediate section, a cam section.

In this manner an adjustable second member of the limiter assembly is embodied in a particularly simple and quick manner.

The first connecting arm may comprise two pieces permanently connectable to each other, the two connection points to at least one of the two articulation axes being formed one onto a first and the other onto a second of the two pieces. Furthermore this construction allows the shape of each of the two pieces to be specialised, and/or makes the shape requirements less stringent in the case of moulding.

In the present description and in the attached claims, a mechanical connection between two members is said to be "removable" if it allows them to be detached without the aid of tools, "permanent" if it allows them to be detached only with the aid of tools, and "fixed" it the detachment may only take place damaging at least one of the two members.

This provision generally favours the assembly of the derailleur and in particular does not oblige any sliding movement to insert the support body between the two connection points of the first connecting arm (between the two elementary connecting arms), also allowing for an articulation pivot protruding from the support body such as, for example, when it is formed by a driving shaft of a geared motor housed in the support body.

When the provision is applied to both articulation axes, the two pieces coincide with the two elementary connecting arms, but in general this it is not necessarily the case.

The cross member may be permanently connected to each of said two pieces.

Alternatively, the cross member may be integral with one of said two pieces and permanently connected to the other of said two pieces.

According to still another alternative, the first connecting arm may be formed as a single piece, cross member included.

In the latter two cases, the cross member may be co-moulded with said one of said two pieces, respectively with the rest of the first connecting arm.

Both in the case of cross member permanently connected to the first connecting arm, and in the case of cross member formed as a single piece in the first connecting arm or integral with one of its component pieces, the cross member and the first connecting arm may be made of different materials, specific for the respective functions.

For example, the first connecting arm may be made of a plastic material, preferably of polyamide filled with structural fiber, preferably carbon fiber; the cross member may be made of metal, more resistant to the shocks by the blind screw, preferably of aluminum alloy, the various preferences being independent from each other.

The first member may be a non-adjustable protrusion projecting from the first component.

Alternatively, the first member may comprise a protrusion protruding from the first component, wherein the protrusion comprises a threaded through hole, the first member further comprising an adjustment blind screw in threaded engagement with the threaded through hole, so as to embody a continuously adjustable first member of the limiter.

Still alternatively, the first member may comprise a protrusion protruding from the first component, wherein the protrusion comprises a first through hole and a second hole transversal thereto and communicating therewith, the first member further comprising a pin provided with a plurality of holes transversal thereto, the pin extending in the first through hole, and a pin extending in the second hole of the protrusion and in a selectable one of the holes of the plurality of holes of the pin, so as to embody a first member of the limiter assembly adjustable in a discrete number of conditions. The first component may be the support body.

The first connecting arm may be the proximal connecting arm.

The derailleur may further comprise a second limiter assembly effective between the first component and the second connecting arm of the pair of connecting arms.

The second limiter assembly may be analogous to said limiter assembly, *mutatis mutandis.*

The derailleur may further comprise a geared motor controlling the mutual motion of the plurality of mutually movable components.

The derailleur may also include a data processing system, controlling the geared motor and any other electric/electronic components of the derailleur. The data processing system may comprise electric components and/or discrete electronic components and/or a micro-controller, which may also integrate memory means. The data processing system may be borne for example on at least one printed circuit board or PCB. The derailleur may therefore be electronic.

Further features and advantages of the present invention will become clearer from the following detailed description of some preferred embodiments thereof, made with reference to the attached drawings, wherein:
- FIG. 1 and 2 are perspective views, respectively from a distal side and from a proximal side, of a bicycle rear derailleur of the articulated parallelogram type, in an arbitrary condition of aperture of the articulated parallelogram,
- FIG. 3 is a schematic perspective view of two components of the derailleur of FIG. 1 with a limiter assembly, in a first mutual position,
- FIG. 4 is a schematic perspective view of the two components of the derailleur of FIG. 1, in a second mutual position,
- FIG. 5 is a perspective view of the connecting arm of FIG. 4, and
- FIG. 6 is an exploded view of the connecting arm of FIG. 4,
- FIG. 7 is a view corresponding to FIG. 4, with a different limiter assembly,
- FIG. 8 is an exploded view of the components of FIG. 7,
- FIG. 9 is a view corresponding to FIG. 4, with a different limiter assembly,
- FIG. 10 is an exploded view of the components of FIG. 9,
- FIG. 11 is a view corresponding to FIG. 4, with a different limiter assembly, and
- FIG. 12 is an exploded view of the components of FIG. 11.

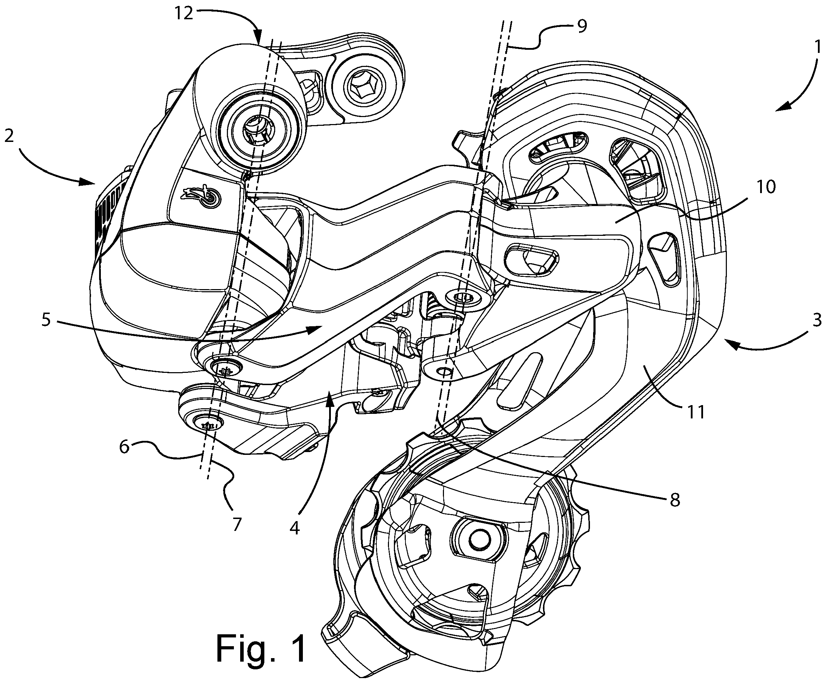

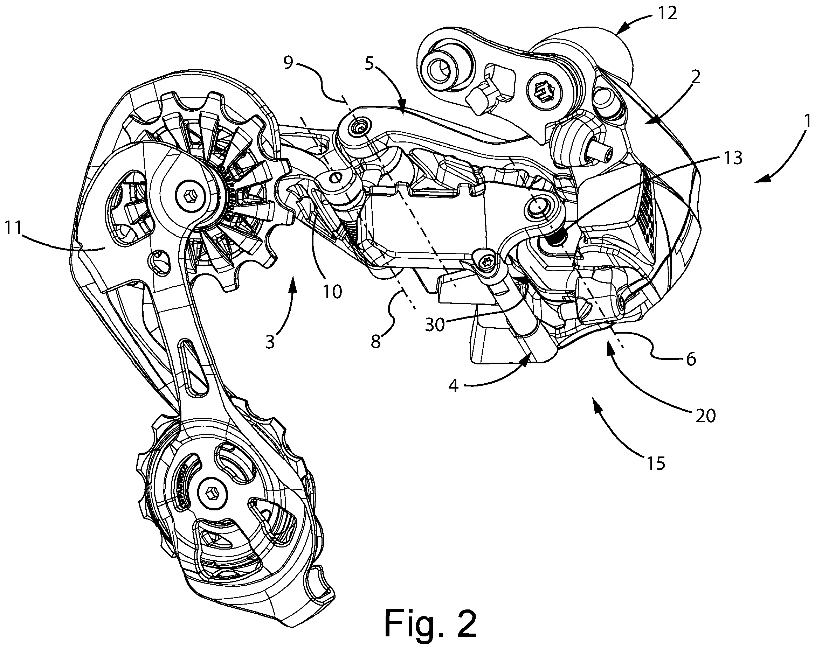

In FIGs. 1 and 2 a bicycle electric/electronic rear derailleur 1 of the articulated parallelogram type is shown. The specific derailleur shown should be considered as merely an illustrative one.

The derailleur 1 comprises a support body 2 configured to be attached to a bicycle frame, a chain guide 3 and a pair of connecting arms 4, 5 between the support body 2 and the chain guide 3, forming a plurality of mutually movable components. The pair of connecting arms comprises a proximal connecting arm 4 and a distal connecting arm 5.

The connecting arms 4, 5 are connected to the support body 2 and to the chain guide 3 at respective geometric articulation axes: a support body-proximal connecting arm articulation axis 6, a support body-distal connecting arm articulation axis 7, a chain guide-proximal connecting arm articulation axis 8 and a chain guide-distal connecting arm articulation axis 9.

The chain guide 3 comprises, for example and as shown, a first member articulated in the articulated parallelogram, sometimes called bottom body and indicated with reference numeral 10, and a second member movable therewith, sometimes called rocker arm and indicated with reference numeral 11. For example, the support body 4 may be attached to the frame through a connection device so-called "articulated joint" 12.

In the case of electric/electronic derailleur, the derailleur 1 may comprise a geared motor. The geared motor may be purely electric or electronic, when the derailleur further includes a data processing system controlling the geared motor and any other electric/electronic components of the derailleur 1, for example comprising one or more components borne by one or more printed circuit boards or PCB. As mentioned above, the geared motor may also comprise a motor not coupled with any speed reducer.

In that case, the derailleur 1 further comprises an electric power supply unit (not shown) comprising one or more secondary cells, for powering the geared motor and any other electric/electronic devices. The electric power supply unit may also include electronic components controlling the electric power supply unit: the electric power supply unit may therefore be a so-called *smart battery.*

The geared motor controls the mutual motion of the mutually movable components 2, 3, 4, 5, in particular it determines the aperture and the closure of the articulated parallelogram, and therefore a displacement of the chain guide 3 -with respect to the support body 2 and therefore to the bicycle frame- having at least one displacement component in the direction of the axis of the group of toothed wheels associated with the hub of the rear wheel or "sprocket assembly", so as to bring the transmission chain (or belt) into engagement with a predetermined toothed wheel or sprocket of the sprocket assembly.

In the case shown, the geared motor, of which the output shaft 13 is visible in FIG. 2, is supported in the support body 2, with the output shaft 13 engaged with the proximal connecting arm 4 at the support body-proximal connecting arm articulation axis 6, but this is merely illustrative and non-limiting. The output shaft 13 of the geared motor may extend along another articulation axis 7, 8, 9, or it may extend along the diagonal of the parallelogram, and the geared motor may be supported in one of the other components 3, 4, 5.

In the case of a mechanical gearshift, the mutual motion of the components 2, 3, 4, 5 in order to change the angles of the articulated parallelogram is forced for example through a sheathed inextensible cable (not shown), also known as Bowden cable, in a manner known per *se.*

As mentioned in the introductory part, it should be ensured that the chain guide 3 never approaches too much the bicycle frame, beyond the largest sprocket, where the rocker arm 11 could hit the spokes of the rear wheel with ensuing mechanical damages and fall risk, nor that it moves too far from the bicycle frame, beyond the smallest sprocket, where the rocker arm 11 would be too exposed to the lateral shocks.

To this end, the derailleur 1 may comprise two limiter assemblies, a so-called "top" one and a so-called "bottom" one. Merely by way of an example, hereinafter reference will be made to a "top" limiter assembly effective between the support body 2, which should be considered illustrative of the first component mentioned in the introductory part of the present description, and the proximal connecting arm 4, which should be considered illustrative of the first connecting arm mentioned in the introductory part of the present description.

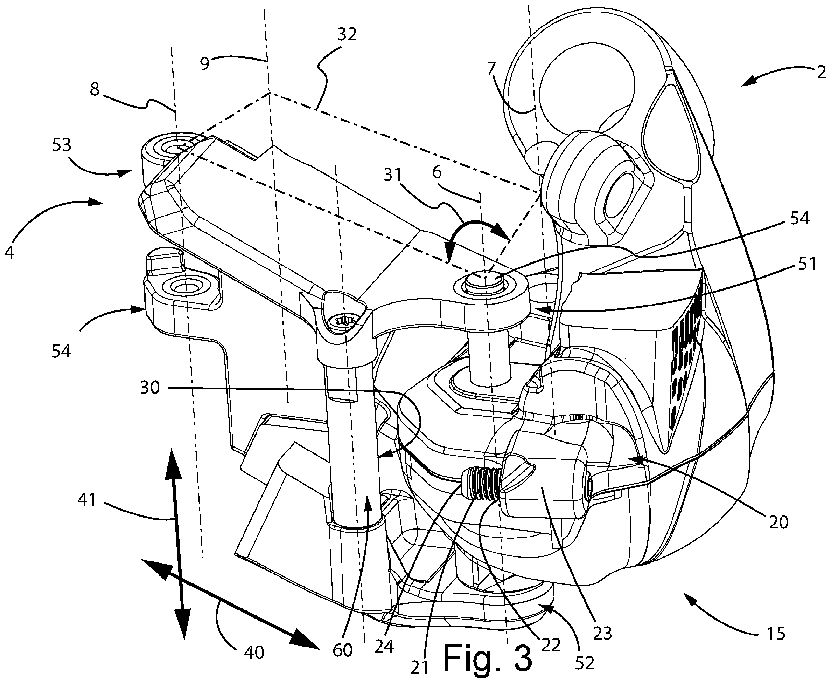

With reference also to **FIGs. 3-12****,** the limiter assembly 15 comprises a first member 20 on the support body 2 and a second member 30 on the proximal connecting arm 4.

Said two members 20, 30, better described hereinafter, define the angle by which it is necessary to mutually rotate the support body 2 and the proximal connecting arm 4, about their shared articulation axis 6, specifically the support body-proximal connecting arm articulation axis 6, and in the direction of approach of the first member 20 to the second member 30, in order to make the first member 20 abut against the second member 30, stopping the mutual rotation.

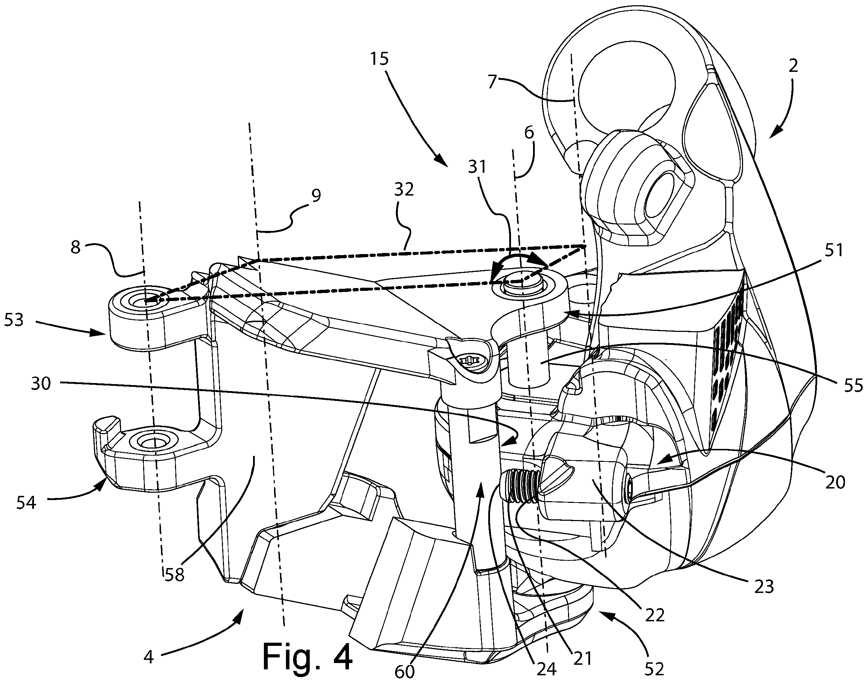

In the case shown, the limiter assembly 15 defines the maximum value of the internal angle 31 of the articulated parallelogram 32 at the vertex corresponding to said shared articulation axis, or support body-proximal connecting arm articulation axis 6, as is clear from a comparison between FIG. 3 which represents an arbitrary condition, and FIG. 4 which represents the end of stroke condition.

In the case of **FIGs. 3-6****,** the first member 20 of the limiter assembly 15 is adjustable, while the second member 30 is not adjustable, it is an abutment surface that, with respect to the proximal connecting arm 4, is not movable.

In particular, in the case shown the first member 20 comprises an adjustment blind screw 21 or limit screw in threaded engagement with a threaded through hole 22 of the support body 2, made for example on a protruding protrusion 23 of the support body 2 as shown.

By screwing and unscrewing the blind screw 21, how much it protrudes from the threaded through hole 22 is adjusted, and therefore that angle is adjusted by which it is necessary to mutually rotate the support body 2 and the proximal connecting arm 4, about the support body-proximal connecting arm articulation axis 6, in order to make the blind screw 21 abut against the second member 30. By unscrewing the blind screw 21, its tip 24 moves to the right in FIGs. 3-4, so that the maximum angle of FIG.4 increases; by screwing the blind screw 21, its tip 24 moves to the left in FIGs. 3-4, so that the maximum angle 31 of FIG.4 decreases.

Considering the two articulation axes 6, 8 involved by the proximal connecting arm 4, a longitudinal direction 40 of the proximal connecting arm 4 may be defined, extended orthogonally to the two articulation axes 6, 8 and crossing them, and a transverse direction 41 of the connecting arm extended parallel to said two articulation axes 6, 8.

The proximal connecting arm 4 is connected, in the derailleur 1, at two points 51, 52 and respectively 53, 54, spaced along each of its own two articulation axes 6, 8, for example by providing, at said points, holes in substantially flat regions (unnumbered for the sake of clarity) of the proximal connecting arm 4 wherein an articulation pivot is inserted, of which the articulation pivot 55 at the articulation axis 6 is shown. The articulation pivot 55 is, in the case shown, the output shaft 13 of the geared motor housed in the support body 2, but, as already emphasised, different arrangements of the geared motor, which is totally absent in the case of a mechanical derailleur, are possible.

It is noted that the limiter assembly 15 differs from the configuration according to the prior art, wherein the limiter assemblies are effective at a single connection point of a connecting arm at an articulation axis thereof to the support body: in a conventional configuration of the limiter assembly, the blind screw 21 on the support body 2 would be arranged higher (o lower), at the height of the connection point 51 (or 52) of the proximal connecting arm; on the proximal connecting arm, a flat abutment surface would be formed in that position along the transverse direction 41. This would however entail a poorly distributed strain on the proximal connecting arm 4.

It is first noted that in the derailleur 1 shown the second member 30 is provided in an intermediate section in the transverse direction 41 of the proximal connecting arm 4, and this entails a more uniform distribution of the strains involved on the proximal connecting arm 4 with respect to the configuration according to the prior art, wherein the limiter assemblies are effective at a single connection point (for example, at the height of the connection point 51 along the transverse direction 41).

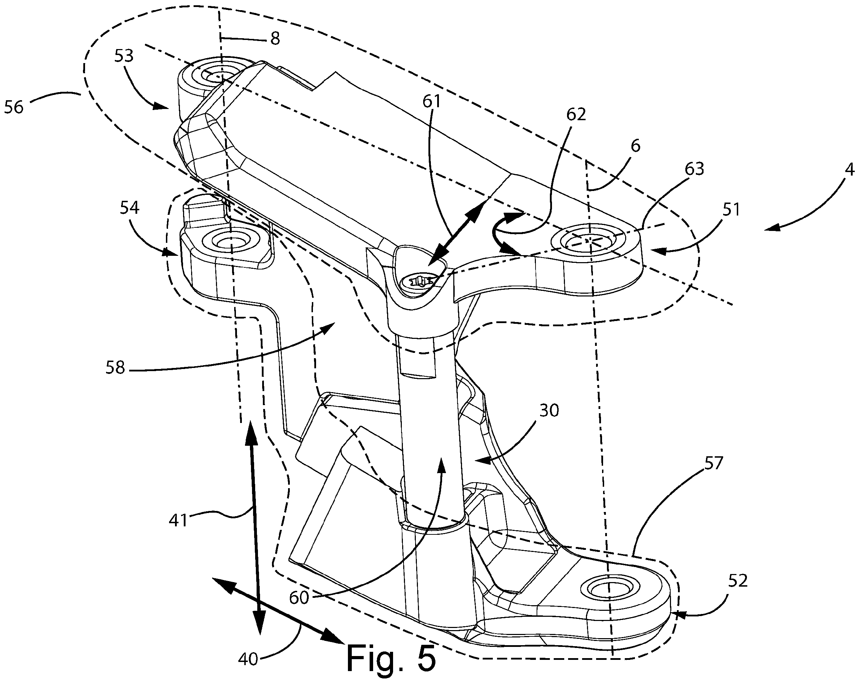

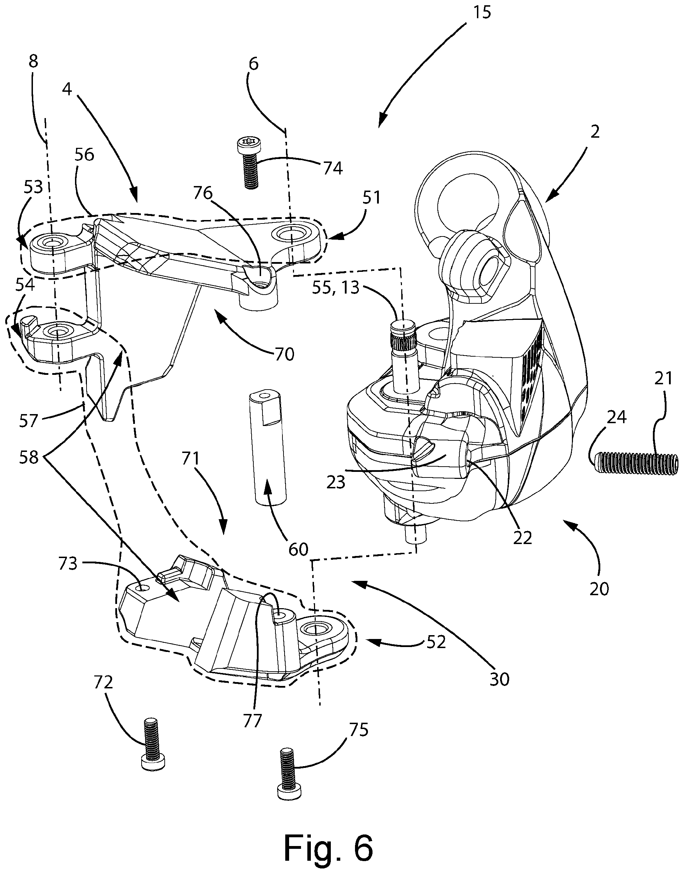

The proximal connecting arm 4 comprises two elementary connecting arms 56, 57 -that are highlighted in dashed line in FIGs. 5 and 6, but not in FIG. 4 for the sake of clarity-, each connected at a single point to each of the two articulation axes 6, 8: the top elementary connecting arm 56 in FIG. 4 is connected to axis 6 at point 51 and to axis 8 at point 53; the bottom elementary connecting arm 57 in FIG. 4 is connected to axis 6 at point 52 and to axis 8 at point 54.

Considering the transverse direction 41, it is noted that the intermediate section of the proximal connecting arm 4 along which the second member 30 extends is longer than each of the two elementary connecting arms 56, 57, what mitigates the alignment tolerance constraints, along the transverse direction 41, between the first member 20 of the support body 2 and the second member 30 of the proximal connecting arm 4, and admits misalignments that might occur during the use of the bicycle: it is irrelevant at which specific height the tip 4 of the blind screw 21 abuts against the abutment surface provided by the second member 30, whereas should the blind screw be, for example, moved up to abut against the top elementary connecting arm 56, in practice no deviation would be possible. The limiter assembly 15 is therefore simpler to be made with respect to the known solutions.

The elementary connecting arms 56, 57 are rigidly connected to each other by a structural member 58 extended transversally thereto.

With reference also to FIGs. 1-2, it is recognised that also the distal connecting arm 5 has an analogous configuration, with two elementary connecting arms rigidly connected to each other by a structural member extended transversally thereto, which provides stiffness against twist.

Turning back to the proximal connecting arm 4 and with particular reference to FIG. 5, wherein it is shown alone for the sake of clarity, in the case shown the second member 30 is formed on a cross member 60 extended transversally between the elementary connecting arms 56, 57, namely from one to the other one of the elementary connecting arms 56, 57, additional with respect to the structural member 58. Although the second member 30 may, alternatively, be provided in an intermediate section of the structural member 58, when a specific member is provided for, then the two cross members 58, 60 to the elementary connecting arms 56, 57 may be configured independently from each other, optimising the role of each.

In particular, the structural member 58 may be formed in the plane containing the two articulation axes 6, 8 or in close proximity of that plane, as shown, so that it has the maximum efficiency in the function of strengthening the proximal connecting arm 4; the cross member 60 may be arranged in the position most suitable for its purpose, based for example on the desired maximum angle 31 and/or on the position of the first member 20 on the support body 2 - for example, looking at the figure, according to whether it is more to the right or more to the left on the face of the support body 2 and/or according to whether said face is closer to or farther from the viewer. Furthermore, also the second member 60 has a certain strengthening effect on the proximal connecting arm 4.

In the case shown, the cross member 60, onto which the abutment 30 is provided, is an oblong body extended in the transverse direction 41, spaced from the plane containing the two articulation axes 6, 7 as qualitatively shown by the double arrow 61.

The distance of the cross member 60 from the plane containing the two articulation axes 6, 7 and/or the angle 62 formed between the plane containing the two articulation axes 6, 8 and a plane (cf. the straight line 63 belonging to that plane) containing the articulation axis 6 and passing through the cross member 60 may be preselected as a function of the desired maximum value of the angle 31 (FIGs. 3-4) -of a range of values thereof, considering the adjustment possibility offered by rotation of the blind screw 21 in the threaded through hole 22.

In the case shown, the second member 30 - and actually the entire cross member 60 - has a circular section. In this manner, no particular precision in the definition of the angular position of the second member 30 with respect to said plane containing the articulation axis 6 and passing through the cross member 60 (cf. the straight line 63 belonging to that plane) is required, as is conversely necessary in the case of a flat abutment surface. A circular section could also be provided for if the second member 30 were directly provided on the structural member 58.

The section of the second abutment member 30 may also be not circular, for example square; in that case its orientation in the plane transversal to the articulation axes 6, 8 affects the coupling with the blind screw 21, whereas a circular section has no effect and always offers a good coupling with the blind screw 21.

Furthermore, with a second member 30 having a circular section, its efficiency depends less on the adjustment of the blind screw 21, with respect to a flat abutment surface as conventional.

With reference in particular to FIG. 6, the proximal connecting arm 4 may comprise two pieces 70, 71 permanently connectable to each other, for example through screwing, as shown by way of an example by the screw 72 extended in a through hole 73 of the bottom piece 71 in FIG. 6 and screwed in a hole (not visible) of the upper piece 70 in FIG. 6.

As shown, the two connection points 51, 52 of the proximal connecting arm 4 to the articulation axis 6 are formed one on the first and the other on the second of the two pieces 70, 71.

In the case shown, the two connection points 53, 54 to the articulation axis 8 are both formed on the piece 70, but the connection point 54 might be formed on the piece 71.

Forming the proximal connecting arm 4 in two pieces 70, 71, the assembly of the derailleur 1 is generally favoured, and in particular no sliding movement is obliged to insert the support body 2 between the two connection points 51, 52 of the proximal connecting arm 4 (between the two elementary connecting arms 56, 57), also allowing for an articulation pivot 55 protruding from the support body 2 such as, for example, when it is embodied by the driving shaft 13 of the geared motor housed in the support body 2.

The cross member 60 may be permanently connected to each of the two pieces 70, 71. In the illustrative case shown in FIG. 6, the cross member 60 is an internally threaded bushing, having a circular section as mentioned above - although this is not strictly necessary - screwed between the two elementary connecting arms 56, 57 through screws 74, 75 extended in through holes 76, 77 of the two elementary connecting arms 56, 57 and in the bushing or cross member 60 from its opposed ends.

Alternatively, the cross member 60 may be integral with, namely one piece with, one of the two pieces 70; 71, and permanently connected to the other of the two pieces 71; 70.

According to still another alternative, the proximal connecting arm 4 may be formed as a single piece, cross member 60 included.

In the latter two cases, a co-moulding process may be used.

Both in the case of cross member 60 permanently connected to the proximal connecting arm 4, and in the case of cross member 60 formed as a single piece in the proximal connecting arm 4 or integral with one of its component pieces 70, 71, it is possible to use different materials, specific for the respective functions.

For example, the proximal connecting arm 4 may be made of a plastic material and the cross member 60 may be made of metal, so as to better withstand shocks by the blind screw 21.

The proximal connecting arm 4 may be made for example of polyamide filled with structural fibre, in particular with carbon fiber.

The cross member 60 may be made for example of aluminum alloy.

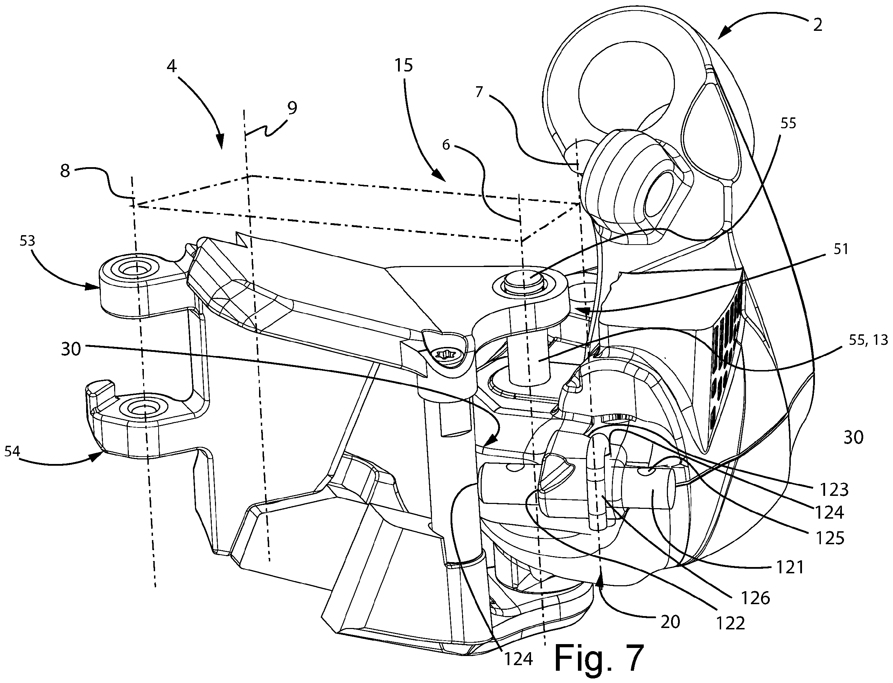

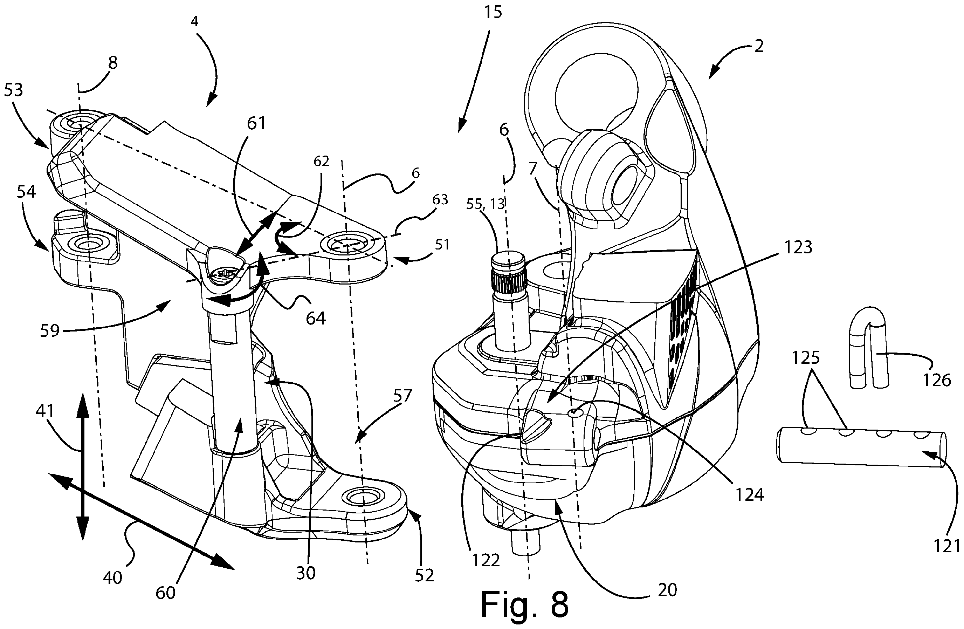

In FIGs. 7 and 8 a limiter assembly 15 is shown, wherein the first member 20 of the limiter assembly 15 is adjustable in a different manner with respect to the limiter assembly 15 of FIGs. 1-6.

In the case shown, the first member 20 comprises a protrusion 123 protruding from the support body 2, which comprises a first through hole 122 and a second through hole 124 transversal thereto and communicating therewith. The first member 20 further comprises a pin 121 provided with a plurality of holes 125 transversal thereto, the pin 121 extending in the first through hole 122, and a pin 126 extending in the second hole 124 of the protrusion 123 and in a selectable one of the holes 125 of the plurality of holes of pin 121.

The first member 20 of the limiter assembly 15 is therefore adjustable in a discrete number of conditions.

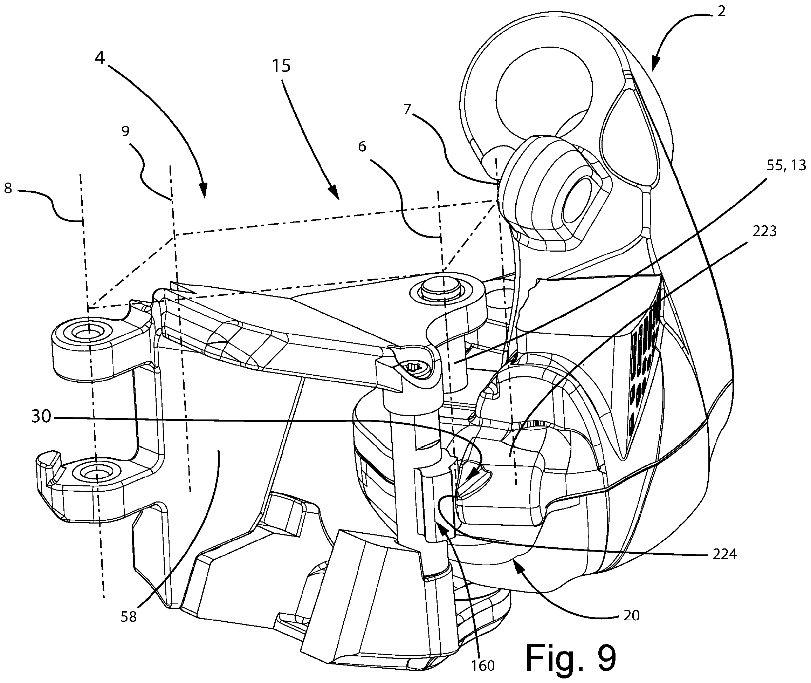

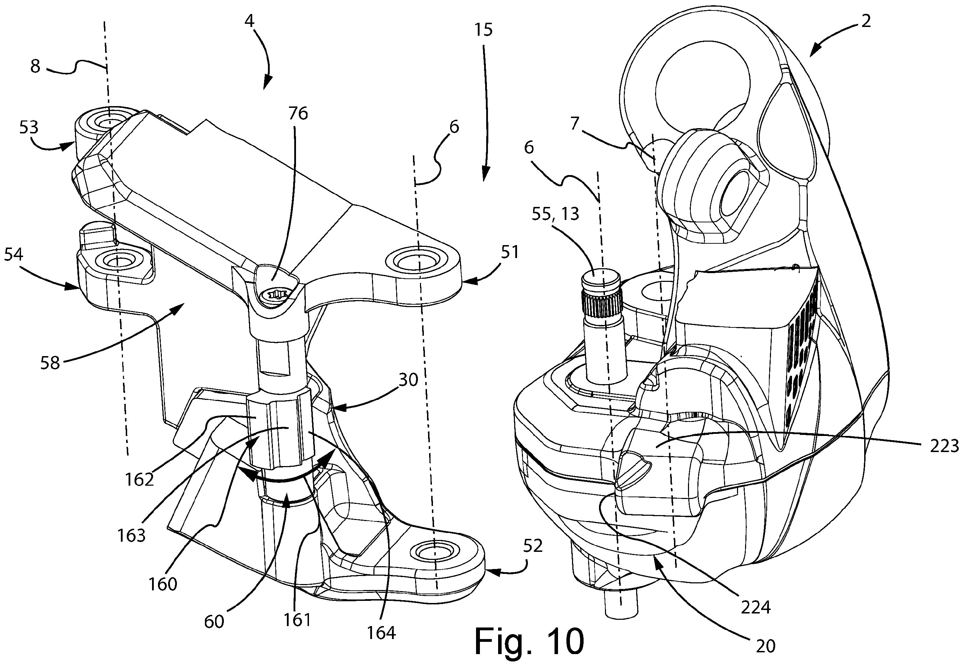

In FIGs. 9 and 10 a limiter assembly 15 is shown, wherein the second member 30 of the limiter assembly 15 is adjustable.

In the case shown, the second member 30 is still provided on a cross member 60 comprising an internally threaded bushing, permanently connected between the two elementary connecting arms 56, 57, but which has, in the intermediate section (in transverse direction 41 of the proximal connecting arm 4) onto which the second member 30 is provided, a cam section 160. The bushing is screwed between the two elementary connecting arms 56, 57 with an adjustable screwing angle, in the direction represented by dual arrow 161. According to the actual screwing angle, the cam section 160 has an abutment surface in a different position and/or with different orientation for abutment of the first member 20 on the support body 2. In the case shown, three abutment surfaces 162, 163, 164 are shown, separated by steps, but they could be in a different number and/or the cam section 160 could also be uniformly variable.

In the case shown, the first member 20 of the limiter assembly 15 is not adjustable and it is a protrusion 223, lacking the blind screw 21 of the limiter assembly 15 of FIGs. 1-6. In FIG. 9 the end of stroke condition is shown, wherein a surface 224 of the protrusion 223 hits the cam 160.

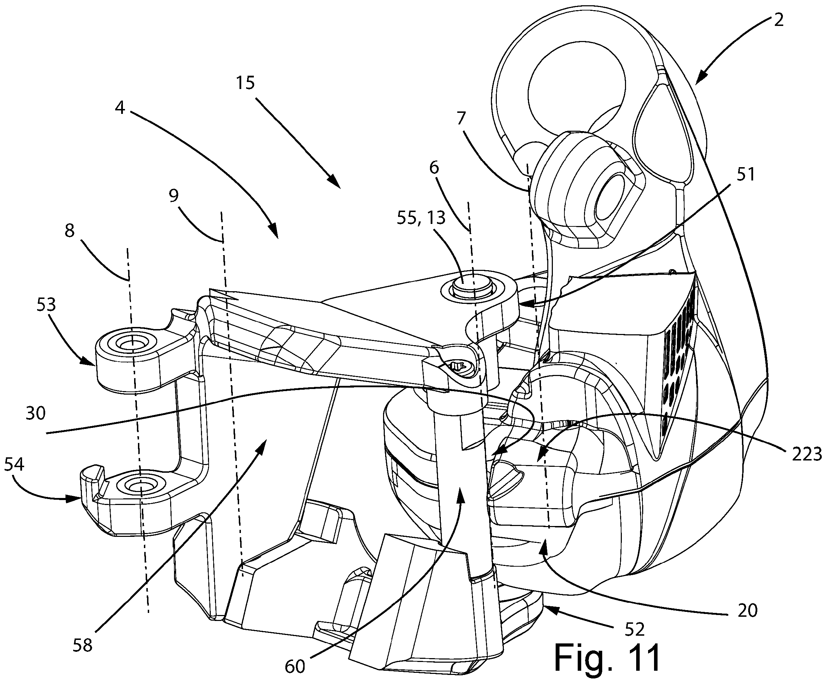

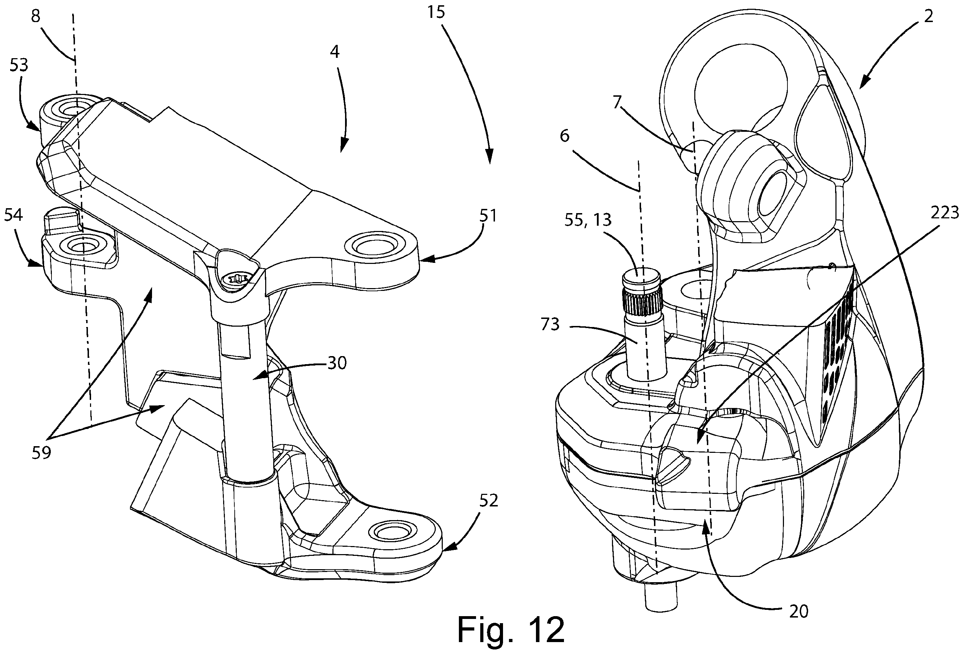

In FIGs. 11 and 12 a limiter assembly 15 is shown, wherein none of the first member 20 and the second member 30 of the limiter assembly 15 is adjustable. The first member corresponds to that described with reference to FIGs. 9 and 10, while the second member 30 corresponds to that described with reference to FIGs. 1-6, and all the possible variants and changes described above apply.

A limiter assembly 15 may also comprise both an adjustable first member 20 and an adjustable second member 30. Merely by way of an example, the first member may correspond to that described with reference to FIGs. 1-6 or to that described with reference to FIGs. 7-8, whereas the second member 30 may correspond to that described with reference to FIGs. 9-10, all the possible variants and changes described above applying to both members 20, 30.

Herein above, an "upper" limiter assembly effective between the support body 2 and the proximal connecting arm has been described.

In a totally analogous manner, a "top" limiter assembly effective between the chain guide 3 - in particular its bottom body 10 - and the distal connecting arm 5, or a "bottom" limiter assembly effective between the chain guide 3 and the distal connecting arm 5 or between the support body 2 and the proximal connecting arm 4, may be provided for.

It is however noted that if the limiter assembly is arranged internally of the articulated parallelogram - namely, on the region of the support body 2 facing towards the chain guide 3 and on the face of the proximal connecting arm 4 facing towards the distal connecting arm 7 in the non-limiting illustrative case of limiter assembly 15 effective between these two components -, rather than externally of the articulated parallelogram as shown, the roles mentioned above of "top" and "bottom" limiter assembly are inverted.

Those skilled in the art will understand that the derailleur 1 may have a shape even considerably different from that shown and/or additional components not shown for the sake of simplicity.

The various embodiments, variants and/or possibilities of each component or group of components that have been described are to be meant as combinable with each other in any manner, unless they are mutually incompatible.

## Claims

1. Bicycle rear derailleur (1) comprising:
a plurality of mutually movable components (2, 3, 4, 5), comprising a support body (2) configured to be attached to a bicycle frame, a chain guide (3) and a pair of connecting arms (4, 5), comprising a proximal connecting arm (4) and a distal connecting arm (5), for connection between the support body (2) and the chain guide (3) at respective articulation axes (6, 7, 8, 9),
each connecting arm (4, 5) being connected at two points (51,52,53,54) spaced along each of its own two articulation axes (6, 8; 7, 9), a longitudinal direction (40) of each connecting arm (4, 5) extending orthogonally to and intersecting said two articulation axes (6, 8; 7, 9), and a transverse direction (41) of each connecting arm (4, 5) extending parallel to said two articulation axes (6, 8; 7, 9), and
a limiter assembly (15) effective between (i) a first component (2) selected between the support body (2) and the chain guide (3) and (ii) a first connecting arm (4) of the pair of connecting arms (4, 5), to define an extreme value of the internal angle (31) of the articulated parallelogram (32) at the vertex corresponding to the articulation axis (6) shared between them,
wherein the limiter assembly (15) comprises a first member (20) on the first component (2) and a second member (30) on the first connecting arm (4), to receive the first member (20) in abutment when the first component (2) and the first connecting arm (4) are mutually rotated in the angular direction of approach of the first member (20) to the second member (30),
**characterized in that** the second member (30) extends at least along an intermediate section in the transverse direction (41) of the first connecting arm (4), wherein extended in the transverse direction is that the size in the transverse direction is comparatively large with respect to its size in a cross-section taken in a plane orthogonal to the transverse direction.

2. Derailleur (1) according to claim 1, wherein the first connecting arm (4) comprises two elementary connecting arms (56, 57), each connected at a single point (51, 53; 52, 54) to each of the two articulation axes (6, 8), and wherein, in the transverse direction of the first connecting arm (4), the intermediate section is longer than each of the elementary connecting arms (56, 57).

3. Derailleur (1) according to claim 1 or 2, wherein the first connecting arm (4) comprises two or said two elementary connecting arms (56, 57), each connected at a single point (51, 53; 52, 54) to each of the two articulation axes (6, 8),
the elementary connecting arms (56, 57) being mutually rigidly connected by at least one structural member (58) extended transversally between the elementary connecting arms (56, 57) of the first connecting arm (4), wherein the second member (30) is provided on a cross member (60), extended transversally between the elementary connecting arms (56, 57) of the first connecting arm (4), additional with respect to the structural member (58).

4. Derailleur (1) according to claim 3, wherein the cross member (60) is an oblong body extended in the transverse direction (41) and spaced from the plane containing the two articulation axes (6, 8).

5. Derailleur (1) according to any of the previous claims, wherein at least one of the first member (20) and the second member (30) is adjustable to adjust said extreme value of the angle (31).

6. Derailleur (1) according to any of the previous claims, wherein the second member (30) has a circular section, preferably wherein said cross member (60) of claims 3-5 comprises an internally threaded bushing, having a circular section, screwed between the two elementary connecting arms (56, 57).

7. Derailleur (1) according to any of claims 3-5, wherein the cross member (60) comprises an internally threaded bushing screwed between the two elementary connecting arms (56, 57) with an adjustable screwing angle, having, in said intermediate section, a cam section (160).

8. Derailleur (1) according to any of the previous claims, wherein the first connecting arm (4) comprises two pieces (70, 71) permanently connectable to each other, the two connection points (51, 52) to at least one (6) of the two articulation axes (6, 8) being formed one onto a first and the other onto a second of the two pieces (70, 71).

9. Derailleur (1) according to claim 8when depending on claim 3, wherein the cross member (60) is permanently connected to each of said two pieces (70, 71).

10. Derailleur (1) according to claim 8 when depending on claim 3, wherein the cross member (60) is integral with one of said two pieces (70, 71) and permanently connected to the other of said two pieces (70, 71).

11. Derailleur (1) according to claim 8 when depending on claim 3, wherein the first connecting arm (4) is formed as a single piece, cross member (60) included.

12. Derailleur (1) according to claim 10 or 11, wherein the cross member (60) is co-moulded with said one of said two pieces (70, 71), respectively with the rest of the first connecting arm (4).

13. Derailleur (1) according to any of claims 2-9, wherein the cross member (60) and the first connecting arm (4) are made of different materials, wherein preferably the first connecting arm (4) is made of a plastic material, more preferably of polyamide filled with structural fiber, even more preferably filled with carbon fiber; and wherein preferably the cross member (60) is made of metal, more preferably of aluminum alloy, the various preferences being independent from each other.

14. Derailleur (1) according to any of the previous claims, wherein the first member (20) is a non-adjustable protrusion (223) projecting from the first component (2).

15. Derailleur (1) according to any of claims 1-13, wherein the first member (20) comprises a protrusion (23, 123) protruding from the first component (2), wherein:
- the protrusion (23) comprises a threaded through hole (22) and the first member (20) further comprises an adjustment blind screw (21) in threaded engagement with the threaded through hole (22), or
- the protrusion (123) comprises a first through hole (122) and a second through hole (124) transversal thereto and communicating therewith, and the first member (20) further comprises a pin (121) provided with a plurality of holes (125) transversal thereto, the pin (121) extending in the first through hole (122), and a pin (126) extending in the second hole (124) of the protrusion (123) and in a selectable one of the holes (125) of the plurality of holes of the pin (121).

## Patentansprüche

1. Hinterer Umwerfer (1) für ein Fahrrad, umfassend:
eine Vielzahl von gegenseitig beweglichen Komponenten (2, 3, 4, 5), umfassend einen Stützkörper (2), dazu ausgebildet, an einem Fahrradrahmen befestigt zu werden, eine Kettenführung (3) und ein Paar von Verbindungsarmen (4, 5), umfassend einen proximalen Verbindungsarm (4) und einen distalen Verbindungsarm (5), zur Verbindung zwischen dem Stützkörper (2) und der Kettenführung (3) an jeweiligen Gelenkachsen (6, 7, 8, 9),
wobei jeder Verbindungsarm (4, 5) an zwei Punkten (51, 52, 53, 54), beabstandet entlang jeder seiner eigenen zwei Gelenkachsen (6, 8; 7, 9), verbunden ist, wobei sich eine Längsrichtung (40) jedes Verbindungsarms (4, 5) orthogonal zu den zwei Gelenkachsen (6, 8; 7, 9) erstreckt und diese schneidet, und sich eine Querrichtung (41) jedes Verbindungsarms (4, 5) parallel zu den zwei Gelenkachsen (6, 8; 7, 9) erstreckt, und
eine Begrenzeranordnung (15), wirksam zwischen (i) einer ersten Komponente (2), ausgewählt zwischen dem Stützkörper (2) und der Kettenführung (3), und (ii) einem ersten Verbindungsarm (4) des Paares von Verbindungsarmen (4, 5) zum Definieren eines Extremwerts des Innenwinkels (31) des Gelenkparallelogramms (32) am Scheitelpunkt entsprechend der zwischen ihnen geteilten Gelenkachse (6),
wobei die Begrenzeranordnung (15) ein erstes Element (20) an der ersten Komponente (2) und ein zweites Element (30) am ersten Verbindungsarm (4) umfasst, um das erste Element (20) im Anschlag aufzunehmen, wenn die erste Komponente (2) und der erste Verbindungsarm (4) in der Winkelrichtung der Annäherung des ersten Elements (20) an das zweite Element (30) gegenseitig gedreht werden,
**dadurch gekennzeichnet, dass**
das zweite Element (30) sich wenigstens entlang eines Zwischenabschnitts in der Querrichtung (41) des ersten Verbindungsarms (4) erstreckt, wobei in der Querrichtung erstreckend bedeutet, dass die Größe in der Querrichtung vergleichsweise groß ist in Bezug auf seine Größe in einem Querschnitt in einer Ebene orthogonal zur Querrichtung.

2. Umwerfer (1) nach Anspruch 1, wobei der erste Verbindungsarm (4) zwei elementare Verbindungsarme (56, 57) umfasst, jeweils verbunden an einem einzigen Punkt (51, 53; 52, 54) mit jeder der zwei Gelenkachsen (6, 8), und wobei in der Querrichtung des ersten Verbindungsarms (4) der Zwischenabschnitt länger ist als jeder der elementaren Verbindungsarme (56, 57).

3. Umwerfer (1) nach Anspruch 1 oder 2, wobei der erste Verbindungsarm (4) zwei oder die zwei elementaren Verbindungsarme (56, 57) umfasst, jeder verbunden an einem einzigen Punkt (51, 53; 52, 54) mit jeder der zwei Gelenkachsen (6, 8),
wobei die elementaren Verbindungsarme (56, 57) durch wenigstens ein Strukturelement (58), das sich quer zwischen den elementaren Verbindungsarmen (56, 57) des ersten Verbindungsarms (4) erstreckt, starr miteinander verbunden sind,wobei das zweite Element (30) auf einem Querelement (60) angeordnet ist, das sich quer zwischen den elementaren Verbindungsarmen (56, 57) des ersten Verbindungsarms (4) erstreckt, zusätzlich in Bezug auf das Strukturelement (58).

4. Umwerfer (1) nach Anspruch 3, wobei das Querelement (60) ein länglicher Körper ist, der sich in Querrichtung (41) erstreckt und von der Ebene, enthaltend die zwei Gelenkachsen (6, 8), beabstandet ist.

5. Umwerfer (1) nach einem der vorhergehenden Ansprüche, wobei das erste Element (20) oder/und das zweite Element (30) anpassbar sind, um den Extremwert des Winkels (31) anzupassen.

6. Umwerfer (1) nach einem der vorhergehenden Ansprüche, wobei das zweite Element (30) einen kreisförmigen Querschnitt aufweist, wobei vorzugsweise das Querelement (60) nach Anspruch 3 bis 5 eine Buchse mit Innengewinde umfasst, die einen kreisförmigen Querschnitt aufweist und zwischen die zwei elementaren Verbindungsarme (56, 57) geschraubt ist.

7. Umwerfer (1) nach einem der Ansprüche 3 bis 5, wobei das Querelement (60) eine zwischen den zwei elementaren Verbindungsarmen (56, 57) mit einem anpassbaren Einschraubwinkel eingeschraubte Buchse mit Innengewinde umfasst, die im Zwischenabschnitt einen Nockenabschnitt (160) aufweist.

8. Umwerfer (1) nach einem der vorhergehenden Ansprüche, wobei der erste Verbindungsarm (4) zwei Teile (70, 71) umfasst, die dauerhaft miteinander verbundbar sind, wobei die zwei Verbindungspunkte (51, 52) zu wenigstens einer (6) der zwei Gelenkachsen (6, 8) einer an einem ersten und der andere an einem zweiten der zwei Teile (70, 71) gebildet sind.

9. Umwerfer (1) nach Anspruch 8, wenn abhängig von Anspruch 3, wobei das Querelement (60) dauerhaft mit jedem der zwei Teile (70, 71) verbunden ist.

10. Umwerfer (1) nach Anspruch 8, wenn abhängig von Anspruch 3, wobei das Querelement (60) integral mit einem der zwei Teile (70, 71) und dauerhaft mit dem anderen der zwei Teile (70, 71) verbunden ist.

11. Umwerfer (1) nach Anspruch 8, wenn abhängig von Anspruch 3, wobei der erste Verbindungsarme (4) als ein Teil, einschließlich des Querelements (60), gebildet ist.

12. Umwerfer (1) nach Anspruch 10 oder 11, wobei das Querelement (60) mit dem einen der zwei Teile (70, 71) beziehungsweise mit dem Rest des ersten Verbindungsarms (4) zusammen geformt ist.

13. Umwerfer (1) nach einem der Ansprüche 2 bis 9, wobei das Querelement (60) und der erste Verbindungsarm (4) aus unterschiedlichen Materialien hergestellt sind, wobei vorzugsweise der erste Verbindungsarm (4) aus einem Kunststoffmaterial, besser aus mit Strukturfasern gefülltem Polyamid, noch besser aus mit Kohlefasern gefülltem Polyamid, hergestellt ist; und wobei das Querelement (60) vorzugsweise aus Metall, besser aus einer Aluminiumlegierung, hergestellt ist, wobei die verschiedenen Bevorzugungen unabhängig voneinander sind.

14. Umwerfer (1) nach einem der vorhergehenden Ansprüche, wobei das erste Element (20) ein nicht anpassbarer Vorsprung (223) ist, der von der ersten Komponente (2) vorsteht.

15. Umwerfer (1) nach einem der Ansprüche 1 bis 13, wobei das erste Element (20) einen Vorsprung (23, 123) umfasst, der aus der ersten Komponente (2) vorsteht, wobei:
- der Vorsprung (23) ein Durchgangsloch (22) mit einem Gewinde umfasst und das erste Element (20) ferner eine Anpassungs-Abdeckschraube (21) aufweist, die mit dem Durchgangsloch (22) mit einem Gewinde in Gewindeeingriff steht, oder
- der Vorsprung (123) ein erstes Durchgangsloch (122) und ein zweites Durchgangsloch (124), quer dazu und damit in Verbindung stehend, umfasst, und das erste Element (20) ferner einen Stift (121), ausgestattet mit einer Vielzahl von Löchern (125) quer dazu, wobei sich der Stift (121) in das erste Durchgangsloch (122) erstreckt, und einen Stift (126), sich in das zweite Loch (124) des Vorsprungs (123) und in ein auswählbares der Löcher (125) der Vielzahl von Löchern des Stifts (121) erstreckend, umfasst.

## Revendications

1. Dérailleur arrière de bicyclette (1) comprenant :
une pluralité de composants mutuellement mobiles (2, 3, 4, 5) comprenant un corps de support (2) configuré pour être lié à un cadre de bicyclette, un guide de chaîne (3) et une paire de bras de connexion (4, 5) qui comprend un bras de connexion proximal (4) et un bras de connexion distal (5), pour une connexion entre le corps de support (2) et le guide de chaîne (3) au niveau d'axes d'articulation respectifs (6, 7, 8, 9),
chaque bras de connexion (4, 5) étant connecté au niveau de deux points (51, 52, 53, 54) qui sont espacés le long de chacun de ses propres deux axes d'articulation (6, 8 ; 7, 9), une direction longitudinale (40) de chaque bras de connexion (4, 5) étant étendue orthogonalement auxdits deux axes d'articulation (6, 8 ; 7, 9) et intersectant ces mêmes deux axes d'articulation, et une direction transversale (41) de chaque bras de connexion (4, 5) étant étendue parallèlement auxdits deux axes d'articulation (6, 8 ; 7, 9), et
un ensemble de limiteur (15) qui est opérationnel entre (i) un premier composant (2) sélectionné entre le corps de support (2) et le guide de chaîne (3) et (ii) un premier bras de connexion (4) de la paire de bras de connexion (4, 5), afin de définir une valeur extrême de l'angle interne (31) du parallélogramme articulé (32) au niveau du vertex correspondant à l'axe d'articulation (6) qui est partagé entre,
dans lequel l'ensemble de limiteur (15) comprend un premier élément (20) sur le premier composant (2) et un second élément (30) sur le premier bras de connexion (4), pour recevoir le premier élément (20) selon une venue en butée lorsque le premier composant (2) et le premier bras de connexion (4) sont mutuellement entraînés en rotation dans la direction angulaire d'approche du premier élément (20) par rapport au second élément (30),
**caractérisé en ce que** :
le second élément (30) est étendu au moins le long d'une section intermédiaire dans la direction transversale (41) du premier bras de connexion (4), dans lequel l'extension dans la direction transversale signifie que la dimension dans la direction transversale est comparativement importante par rapport à la dimension afférente selon une section en coupe transversale prise dans un plan orthogonal à la direction transversale.

2. Dérailleur (1) selon la revendication 1, dans lequel le premier bras de connexion (4) comprend deux bras de connexion élémentaires (56, 57) dont chacun est connecté au niveau d'un unique point (51, 53 ; 52, 54) à chacun des deux axes d'articulation (6, 8), et dans lequel, dans la direction transversale du premier bras de connexion (4), la section intermédiaire est plus longue que chacun des bras de connexion élémentaires (56, 57).

3. Dérailleur (1) selon la revendication 1 ou 2, dans lequel le premier bras de connexion (4) comprend deux ou lesdits deux bras de connexion élémentaires (56, 57) dont chacun est connecté au niveau d'un unique point (51, 53 ; 52, 54) à chacun des deux axes d'articulation (6, 8),
les bras de connexion élémentaires (56, 57) étant connectés mutuellement de façon rigide par au moins un élément structurel (58) qui est étendu transversalement entre les bras de connexion élémentaires (56, 57) du premier bras de connexion (4), dans lequel le second élément (30) est prévu sur un élément transversal (60), qui est étendu transversalement entre les bras de connexion élémentaires (56, 57) du premier bras de connexion (4), en supplément par rapport à l'élément structurel (58).

4. Dérailleur (1) selon la revendication 3, dans lequel l'élément transversal (60) est un corps oblong qui est étendu dans la direction transversale (41) et qui est espacé du plan qui contient les deux axes d'articulation (6, 8).

5. Dérailleur (1) selon l'une quelconque des revendications précédentes, dans lequel au moins un élément parmi le premier élément (20) et le second élément (30) peut être réglé afin de régler ladite valeur extrême de l'angle (31).

6. Dérailleur (1) selon l'une quelconque des revendications précédentes, dans lequel le second élément (30) présente une section circulaire, de préférence dans lequel ledit élément transversal (60) selon les revendications 3 à 5 comprend une douille filetée de façon interne qui présente une section circulaire et qui est vissée entre les deux bras de connexion élémentaires (56, 57).

7. Dérailleur (1) selon l'une quelconque des revendications 3 à 5, dans lequel l'élément transversal (60) comprend une douille filetée de façon interne qui est vissée entre les deux bras de connexion élémentaires (56, 57) selon un angle de vissage réglable, comportant, dans ladite section intermédiaire, une section de came (160).

8. Dérailleur (1) selon l'une quelconque des revendications précédentes, dans lequel le premier bras de connexion (4) comprend deux pièces (70, 71) qui peuvent être connectées de façon permanente l'une à l'autre, les deux points de connexion (51, 52) sur au moins l'un (6) des deux axes d'articulation (6, 8) étant formés à raison d'un sur une première des deux pièces (70, 71) et de l'autre sur une seconde de ces mêmes deux pièces.

9. Dérailleur (1) selon la revendication 8 lorsqu'elle dépend de la revendication 3, dans lequel l'élément transversal (60) est connecté de façon permanente à chacune desdites deux pièces (70, 71).

10. Dérailleur (1) selon la revendication 8 lorsqu'elle dépend de la revendication 3, dans lequel l'élément transversal (60) est d'un seul tenant avec l'une desdites deux pièces (70, 71) et est connecté de façon permanente à l'autres desdites deux pièces (70, 71).

11. Dérailleur (1) selon la revendication 8 lorsqu'elle dépend de la revendication 3, dans lequel le premier bras de connexion (4) est formé en tant qu'une seule pièce, élément transversal (60) inclus.

12. Dérailleur (1) selon la revendication 10 ou 11, dans lequel l'élément transversal (60) est co-moulé avec ladite une desdites deux pièces (70, 71), de façon respective avec le reste du premier bras de connexion (4).

13. Dérailleur (1) selon l'une quelconque des revendications 2 à 9, dans lequel l'élément transversal (60) et le premier bras de connexion (4) sont réalisés en des matériaux différents, dans lequel, de préférence, le premier bras de connexion (4) est réalisé en une matière plastique, de façon davantage préférable, en un polyamide rempli d'une fibre structurelle, de façon encore davantage préférable, rempli d'une fibre de carbone ; et dans lequel, de préférence, l'élément transversal (60) est réalisé en un métal, de façon davantage préférable, en un alliage d'aluminium, les diverses préférences étant indépendantes les unes des autres.

14. Dérailleur (1) selon l'une quelconque des revendications précédentes, dans lequel le premier élément (20) est une protubérance non réglable (223) qui fait saillie par rapport au premier composant (2).

15. Dérailleur (1) selon l'une quelconque des revendications 1 à 13, dans lequel le premier élément (20) comprend une protubérance (23, 123) qui fait saillie par rapport au premier composant (2), dans lequel :
- la protubérance (23) comprend un trou traversant taraudé (22) et le premier élément (20) comprend en outre une vis sans tête de réglage (21) en engagement par vissage à filets mutuellement complémentaires avec le trou traversant taraudé (22) ; ou
- la protubérance (123) comprend un premier trou traversant (122) et un second trou traversant (124) qui est transversal par rapport au premier trou traversant et qui communique avec, et le premier élément (20) comprend en outre une broche (121) qui est munie d'une pluralité de trous (125) qui sont transversaux par rapport à cette même broche, la broche (121) étant étendue à l'intérieur du premier trou traversant (122), et une broche (126) qui est étendue à l'intérieur du second trou traversant (124) de la protubérance (123) et à l'intérieur d'un trou pouvant être sélectionné parmi les trous (125) de la pluralité de trous de la broche (121).
